# EUROPÄISCHE PATENTANMELDUNG

(11) **EP 0 569 608 A1**
(43) Veröffentlichungstag der Anmeldung: **18.11.1993**
(21) Anmeldenummer: 92107993.5
(22) Anmeldetag: 12.05.1992
(51) Int. Cl.: G01L 27/00, F02P 5/04

(54) **Diagnoseverfahren für Drucksensoren im Brennraum einer Brennkraftmaschine**

(71) Anmelder: SIEMENS AKTIENGESELLSCHAFT, D-80333 München (DE)
(72) Erfinder: Treinies, Stephan, W-8402 Neutraubling (DE); Wier, Manfred, Dr., W-8411 Wenzenbach (DE)

(57) **Zusammenfassung**

Der von einem in Form einer Unterlegscheibe zwischen Zündkerze und Zylinderkopf angeordneten piezoresistiven Drucksensor (12) erfaßte Brennraumdruck (p1,p2) wird mit Bezugswerten verglichen, die lastabhängig in einem Kennfeld abgelegt sind. Bei Erreichen einer außerhalb eines Toleranzbereiches liegenden Abweichung wird entweder auf einen fehlerhaften Drucksensor (12) (mangelnde Empfindlichkeit) oder auf fehlerhafte Montage (ungenügendes Anzugsdrehmoment) des Sensors (12) geschlossen und eine Fehleranzeigevorrichtung (19) aktiviert.

## Beschreibung

Die Erfindung betrifft ein Verfahren zum Überprüfen von Drucksensoren im Brennraum einer Brennkraftmaschine gemäß den Oberbegriffen von Anspruch 1 und Anspruch 6.

Ein solches Verfahren ist aus der DE 29 42 250 A1 Bei dieser Vorrichtung zur Erfassung der beim Klopfen einer Brennkraftmaschine auftretenden Schwingungen mit einem die Schwingungen erfassenden Drucksensor und einer die Sensorsignale verarbeitenden Auswerteschaltung wird es ermöglicht, eine laufende Überwachung des Sensors während des Betriebes der Brennkraftmaschine durchzuführen und einen Ausfall des Sensors zu erkennen. Diese Sensorausfallerkennung beruht auf der Plausibilitätsbetrachtung, daß bei intaktem Sensor das vom Sensor abgegebene Signal einen Pegel aufweist, der innerhalb eines vom jeweiligen Betriebszustand der Brennkraftmaschine abhängigen Bereichs (Minimalpegel und/oder Maximalpegel) liegt.

Bei Brennkraftmaschinen werden Drucksensoren zur Bestimmung des Brennraumdruckes in den Zylindern verwendet, deren Ausgangssignale für die Diagnose und Regelung der Verbrennung, zur Klopfregelung, zur Bestimmung der geleisteten Arbeit usw. ausgewertet werden.

Wird der Brennraumdruck mit Hilfe von piezoresistiven Keramikscheiben -die zwischen Zündkerze und Zylinderkopf montiert werden- erfaßt, so liefert dieser Drucksensor die für die Regelung der Brennkraftmaschine nötigen Signale mit der erforderlichen Genauigkeit nur bei fehlerfreier Montage mit einem genau definierten Anzugsdrehmoment. Auch muß ein solcher Sensor im Sinne einer optimalen Regelung der Brennkraftmaschine auf Unterschreiten einer notwendigen Mindestempfindlichkeit überwacht werden.

Der Erfindung liegt die Aufgabe zugrunde, ein Diagnoseverfahren anzugeben, mit dem Drucksensoren der genannten Art auf ihre Funktionstüchtigkeit geprüft werden können.

Die erfindungsgemäße Lösung ist in den Ansprüchen 1 und 6 gekennzeichnet. Vorteilhafte Weiterbildungen finden sich in den Unteransprüchen.

Ein Ausführungsbeispiel der Erfindung ist in der Zeichnung dargestellt und wird anhand der nachfolgenden Beschreibung näher erläutert. Es zeigen:
Figur 1 ein vereinfachtes Blockschaltbild einer Steuereinrichtung für eine Brennkraftmaschine und
Figur 2 ein schematisches Diagramm des Druckverlaufs in einem Zylinder zur Erklärung der Funktionsweise der Erfindung.

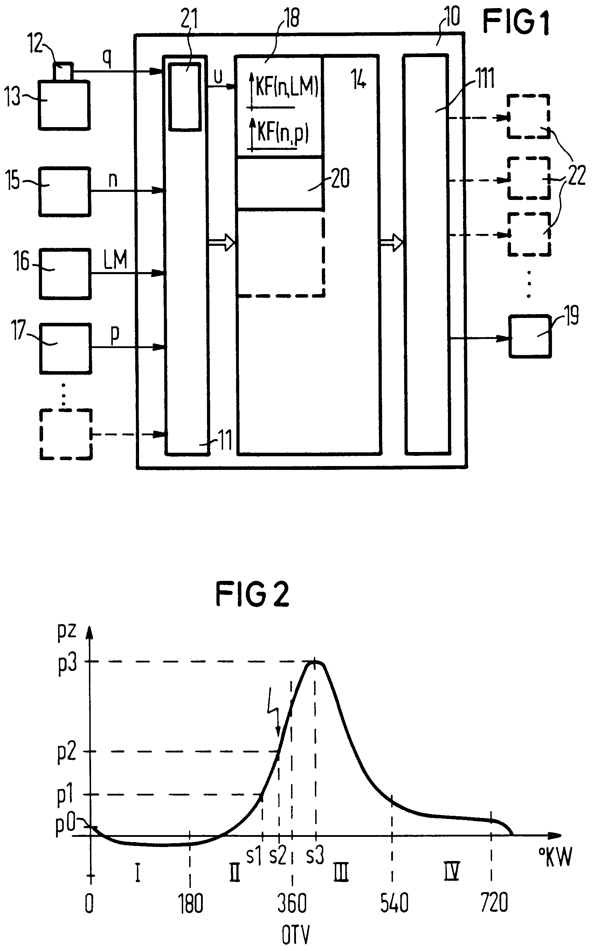

Bei dem in Figur 1 in vereinfachter Form dargestellten Blockschaltbild einer Steuereinrichtung 10 für eine Brennkraftmaschine sind nur diejenigen Teile gezeigt, die für das Verständnis des erfindungsgemäßen Verfahrens nötig sind. Mit dem Bezugszeichen 13 ist ein Zylinder einer Brennkraftmaschine bezeichnet, dem ein Drucksensor 12 zum Erfassen des Brennraumdruckes zugeordnet ist. Dieser Drucksensor 12 ist als Piezokeramikscheibe ausgebildet und wird als Unterlegscheibe zwischen Zündkerze und Zylinderkopf montiert. Bei Mehrzylindermotoren können jedem Zylinder, bei Motoren mit Doppelzündung -die zwei Zündkerzen pro Zylinder aufweisen- jeder einzelnen Zündkerze ein solcher Drucksensor 12 zugeordnet sein. Der piezoelektrische Drucksensor 12 liefert ein Ladungssignal q in einer der Größe des Drucks im jeweiligen Brennraum des Zylinders 13 proportionalen Menge an eine Signalaufbereitungsschaltung 11, die wiederum Teil eines elektronischen Steuergerätes 10 der Brennkraftmaschine sein kann. Die Signalaufbereitungsschaltung 11 enthält einen Ladungsverstärker 21, der das von dem Drucksensor 12 gelieferte Ladungssignal q verstärkt und in ein für die Weiterverarbeitung in einem Mikrocomputer 14 der elektronischen Steuereinrichtung 10 in ein geeignetes Spannungssignal U umwandelt. In Abhängigkeit der Brennraumdrucksignale wird der Zündzeitpunkt und/oder die Kraftstoffzumessung gesteuert oder geregelt. Die Messung des Brennraumdruckverlaufs bietet unter anderem die Möglichkeit der zylinder-selektiven Erkennung von fehlerhaften Verbrennungsvorgängen, beispielsweise von Zündaussetzern und Motorklopfen. Zum Betrieb der Brennkraftmaschine sind an die Signalaufbereitungsschaltung 11 weitere Sensoren angeschaltet, von denen hier nur ein Drehzahlgeber 15 für die Drehzahl n der Brennkraftmaschine, ein Luftmassenmesser 16 für die Luftmasse und ein Drucksensor 17 für den Saugrohrdruck p gezeigt sind. Weitere, nicht näher bezeichnete Sensoren, die zum Betrieb der Brennkraftmaschine nötig sind, wie z.B Temperatursensoren, Abgassensoren usw. sind mit strichlierter Linie angedeutet. Der Mikrocomputer 14 errechnet aus den einzelnen Eingangssignalen die für den optimalen Betrieb der Brennkraftmaschine nötigen Parameter und steuert über eine weitere Signalaufbereitungsschaltung 111 die einzelnen Aktoren 22 für die Einspritzventile, Zündanlage usw. an.

Figur 2 zeigt in qualitativer Weise den Druckverlauf pz im Zylinder (Brennraumdruck) einer Viertaktverbrennungskraftmaschine während eines ganzen Arbeitszyklus des Zylinders, beispielsweise des Zylinders 13 in Fig. 1. Auf der Abszisse ist der Kurbelwellenwinkel von 0 Grad bis 720 Grad KW, entsprechend zwei vollen Umdrehungen der Kurbelwelle aufgetragen. Dabei entsprechen die Werte 0 Grad und 720 Grad den Kolbenstellungen im oberen Totpunkt bei Ladungswechsel, d.h. zwischen Ausstoßtakt IV und Ansaugtakt I des Arbeitszyklus, wobei sowohl das Auslaß-als auch das Einlaßventil des Zylinders geöffnet ist und der Druck im Zylinder in etwa dem Atmosphärendruck po entspricht. Der Wert 360 Grad KW entspricht der Kolbenstellung im oberen Totpunkt OTV bei Verbrennung, also zwischen dem Verdichtungstakt II und dem Arbeitstakt III des Arbeitszyklus. Der ungefähre Zündzeitpunkt des komprimierten Kraftstoff-Luftgemisches ist durch ein Pfeilsymbol angedeutet. Die zur Überprüfung der Funktionstüchtigkeit des Drucksensors 12 herangezogenen Kurbelwellenstellungen s1, s2 und die dabei auftretenden Druckwerte (im folgenden als Meßwerte bezeichnet) p1 und p2 liegen im Verdichtungstakt II des Zylinders und somit außerhalb des Bereiches, in dem Klopferscheinungen auftreten. Außerdem ist in der Figur 2 der maximale Brennraumdruck p3 im Zylinder eingezeichnet, der nach dem oberen Totpunkt bei Verbrennung OTV bei der Kurbelwellenstellung s3 auftritt. Auch dieser maximale Druck p3 ist für die Diagnose der Piezokeramikscheibe 12 heranzuziehen.

Gemäß einem ersten Ausführungsbeispiel wird die Druckdifferenz p2-p1 der beiden Meßwerte während des Verdichtungstaktes II des Arbeitszyklus ausgewertet. Hierzu wird bei den Kurbelwellenstellungen s1 und s2 jweils der dabei auftretende Druck p1 und p2 mit Hilfe des zu prüfenden Drucksensors 12 erfaßt und die Differenz p2-p1 gebildet. Anschließend wird diese Differenz mit einem Bezugswert verglichen, der entweder in einem Kennfeld KF (n,LM) abhängig von der Drehzahl n der Brennkraftmaschine und der angesaugten Luftmasse LM oder in einem Kennfeld KF (n,p) abhängig von der Drehzahl n und dem Saugrohrdruck p innerhalb eines Speichers 18 der Steuerungseinrichtung 10 abgelegt ist. Bei Unterschreiten des Bezugswertes wird ein in der Signalaufbereitungsschaltung 11 angeordneter Häufigkeitszähler 20 gestartet. Zur kontinuierlichen Überprüfung des Drucksensors 12 kann die Differenz der Meßwerte p1,p2 entweder bei jedem Arbeitszyklus oder in einem wählbaren Takt erfolgen. Erreicht die Anzahl der vom Häufigkeitszähler 20 erfaßten Abweichwerte einen vorher festgelegten Maximalwert, so wird auf einen fehlerhaften Drucksensor 12 bzw. eine fehlerhafte Montage des Sensors geschlossen und der Mikrocomputer 14 steuert über die Signalaufbereitungsschaltung 111 eine optisch und/oder akustische Fehleranzeigevorrichtung 19 an.

Eine andere Möglichkeit der Auswertung der Druckdifferenz p2-p1 im Verdichtungstakt II besteht darin, im quasistationären Betrieb eine gleitende Mittelwertbildung der Druckdifferenzen aus einer vorgegebenen Anzahl von in aufeinanderfolgenden Arbeitszyklen erfaßten Meßwerte nach folgender Vorschrift zu ermitteln.
PDIFFₙ₊₁ = PDIFFₙ₋₁ X (1-MITKO) + PDIFF x MITKO
Mit PDIFFₙ₊₁ = berechneter Mittelwert
PDIFFₙ₋₁ = vorhergehender Mittelwert
PDIFF = aktueller Mittelwert
MITKO = wählbare Mitkopplungskonstante 0 <MITKO <1.
Überschreitet der Mittelwert einen Bezugswert, der in einem Kennfeld abhängig von der Drehzahl n und der Luftmasse LM oder in einem Kennfeld abhängig von der Drehzahl n und Saugrohrdruck p abgelegt ist, wird auf fehlerhaften Sensor erkannt, der analog dem beschriebenen Verfahren über eine Fehleranzeigevorrichtung 19 dem Führer des Fahrzeugs mitgeteilt wird.

Darüber hinaus ist es auch möglich, nicht Druckdifferenzen, sondern nur einzelne erfaßte Meßwerte für den Brennraumdruck zur Überprüfung des Drucksensors 12 auszuwerten. Dieser einzelne Meßwert kann dabei entweder im Verdichtungstakt II (z.B. Druck p2) des Arbeitszyklus liegen oder es erfolgt eine Messung und Auswertung des maximalen Brennraumdruckes (Meßwert p3) nach dem OTV. Die Bestimmung, ob ein fehlerhafter Drucksensor bzw. ein fehlerhaftes Einbauen des Drucksensors vorliegt, geschieht analog den beiden beschriebenen Verfahren.

Anstelle von Druckdifferenzen werden nur die einzelnen Druckwerte mit Bezugswerten verglichen; die Weiterverarbeitung und Auswertung geschieht nach demselben Prinzip. Der maximale Brennraumdruck p3 kann zwar nicht mehr an einem bestimmten, vorher festgelegten Kurbelwinkel abgetastet werden, dafür ist aber bei Auswertung des maximalen Brennraumdruckes p3 die Auswirkung eines durch fehlerhafte Montage bewirkten Anzugsdrehmoments der Piezokeramikscheibe bzw. die geringere Empfindlichkeit des Sensors größer als bei Auswertung der Druckdifferenz p2-p1 oder eines einzelnen Druckwertes p2 vor OTV

Eine weitere Möglichkeit der Fehlerdiagnose solcher Piezokeramikscheiben besteht darin, bei Auswertung nur eines Meßwertes (Druckwert p2 vor OTV) durch gleitende Mittelwertbildung einen oberen und unteren Schwellenwert um den Mittelwert festzulegen und somit ein Streuband oder einen Toleranzbereich zu definieren. Liegt der aktuelle, erfaßte Meßwert außerhalb dieses Streubandes, so wird ein Häufigkeitszähler inkrementiert. Erreicht die Anzahl der vom Häufigkeitszähler erfaßten Druckwerte einen Maximalwert, so wird ebenfalls auf Fehler erkannt. Die Fehlerschwellen um den Mittelwert können dabei symmetrisch oder unsymmetrisch gewählt sein.

### Bezugszeichenliste/Begriffsliste

- I =: Ansaugtakt
- II =: Verdichtungstakt
- III =: Arbeitstakt
- IV =: Ausstoßtakt
- n =: Motordrehzahl
- LM =: Luftmasse
- p =: Saugrohrdruck
- q =: Ladungssignal
- p1,p2,p3 =: Meßwerte (für den Druck)
- pi =: Bezugswerte (für den Druck)
- s1,s2,s3 =: Kurbelwellenstellungen
- pz =: Druck im Zylinder, Brennraumdruck
- po =: Atmosphärendruck
- OTV =: oberer Totpunkt bei Verbrennung
- U =: Spannungssignal
- KF (n,p) =: Kennfeld, aufgespannt über Drehzahl und Saugrohrdruck
- KF (n,LM) =: Kennfeld, aufgespannt über Drehzahl und Luftmasse
- 10 =: Steuerungseinrichtung, elektronisches Steuergerät
- 11,111 =: Signalaufbereitungsschaltung
- 12 =: piezoresistiver Drucksensor
- 13 =: Zylinder
- 14 =: Mikrocomputer
- 15 =: Drehzahlgeber
- 16 =: Luftmassenmesser
- 17 =: Drucksensor (Saugrohrdruck)
- 18 =: Speicher
- 19 =: Fehleranzeigevorrichtung
- 20 =: Häufigkeitszähler
- 21 =: Ladungsverstärker
- 22 =: Aktoren

## Patentansprüche

1. Verfahren zum Überprüfen von Drucksensoren (12) für die Erfassung des Brennraumdruckes (pz) von Brennkraftmaschinen, mit einer elektronischen Steuerungseinrichtung (10), wobei Meßwerte (p1,p2,p3) für den momentanen Druck im Brennraum bei mindestens einer Kurbelwellenstellung (s1,s2,s3) erfaßt und ausgewertet werden, **dadurch gekennzeichnet,** daß Bezugswerte (pi) für den Brennraumdruck (pz) lastabhängig in einem Kennfeld (KF(n,Lm)), (KF(n,p)) innerhalb eines Speichers (18) der elektronischen Steuerungseinrichtung (10) abgelegt sind, daß die Meßwerte (p1,p2,p3) mit diesen Bezugswerten (pi) verglichen werden und daraus ein Abweichwert gewonnen und gespeichert wird und daß bei Erreichen einer vorgegebenen Anzahl von außerhalb eines Toleranzbereiches liegenden Abweichwerten eine Fehleranzeigevorrichtung (19) aktiviert wird.

2. Verfahren nach Anspruch 1, **dadurch gekennzeichnet,** daß die Meßwerte (p1,p2) bei bestimmten Kurbelwellenstellungen (s1,s2) in dem Verdichtungstakt (II) des Arbeitszyklus der Brennkraftmaschine ausgewertet werden.

3. Verfahren nach Anspruch 1, **dadurch gekennzeichnet,** daß als Meßwert (p3) der Maximaldruck im Brennraum ausgewertet wird.

4. Verfahren nach Anspruch 1, **dadurch gekennzeichnet,** daß Differenzen (p2-p1) von zwei bei zeitlich aufeinanderfolgenden Kurbelwellenstellungen (s1,s2) auftretenden Meßwerten (p1,p2) innerhalb des Verdichtungstaktes (II) des Arbeitszyklus der Brennkraftmaschine ausgewertet werden.

5. Verfahren nach Anspruch 1, **dadurch gekennzeichnet,** daß die Meßwerte (p1,p2,p3; p2-p1) vor dem Vergleich mit den Bezugswerten (pi) einer gleitenden Mittelwertbildung aus einer vorgegebenen Zahl von in aufeinanderfolgenden Arbeitszyklen erhaltenen Meßwerten (p1,p2,p3;p2-p1) unterworfen werden.

6. Verfahren zum Überprüfen von Drucksensoren (12) für die Erfassung des Brennraumdruckes (pz) von Brennkraftmaschinen, mit einer elektronischen Steuerungseinrichtung (10), wobei Meßwerte (p1,p2,p3) für den momentanen Druck im Brennraum bei mindestens einer Kurbelwellenstellung (s1,s2,s3) erfaßt und ausgewertet werden, **dadurch gekennzeichnet,** daß die Meßwerte (p1,p2,p3) einer gleitenden Mittelwertbildung aus einer vorgegebenen Zahl von in aufeinanderfolgenden Arbeitszyklen erhaltenen Meßwerten (p1,p2,p3) unterworfen werden, ein oberer und ein unterer Schwellwert um diesen Mittelwert festgelegt wird und eine Zähleinrichtung (20) inkrementiert wird, wenn die aktuellen Meßwerte (p1,p2,p3) außerhalb des durch die beiden Schwellwerte festgelegten Toleranzbereiches liegen und daß bei Erreichen einer vorgegebenen Anzahl von außerhalb des Toleranzbereiches liegenden Meßwerten (p1,p2,p3) die Fehleranzeigevorrichtung (19) aktiviert wird.
